**Europäisches Patentamt**

**European Patent Office**

**Office européen des brevets**

(19)

(11) Veröffentlichungsnummer: **0 036 938**
**B1**

(12) # EUROPÄISCHE PATENTSCHRIFT

(45) Veröffentlichungstag der Patentschrift:
**29.06.83**

(51) Int. Cl.³: **B 01 J 37/02,** B 01 J 23/56,
B 01 D 53/36

(21) Anmeldenummer: **81101106.3**

(22) Anmeldetag: **17.02.81**

(54) Verfahren zur Herstellung und Verwendung eines Katalysatorträgers.

(30) Priorität: **21.03.80 DE 3010950**

(43) Veröffentlichungstag der Anmeldung:
**07.10.81 Patentblatt 81/40**

(45) Bekanntmachung des Hinweises auf die Patenterteilung:
**29.06.83 Patentblatt 83/26**

(84) Benannte Vertragsstaaten:
**AT BE CH DE FR GB IT LI NL SE**

(56) Entgegenhaltungen:
**WO-A-79/00247**
**DE-A-2 450 664**
**DE-A-2 458 111**
**FR-A-2 194 482**
**FR-A-2 253 561**
**GB-A-2 002 648**

(73) Patentinhaber: **HOECHST AKTIENGESELLSCHAFT,
Postfach 80 03 20, D-6230 Frankfurt/Main 80 (DE)**

(72) Erfinder: **Vogt, Wilhelm, Dr., Bellerstrasse 74,
D-5032 Hürth-Efferen (DE)**
Erfinder: **Glaser, Hermann, Magdalenenweg 16,
D-5042 Erftstadt (DE)**
Erfinder: **Dyrschka, Helmut, Theodor-Heuss-Strasse 2,
D-5042 Erftstadt (DE)**

## Verfahren zur Herstellung und Verwendung eines Katalysatorträgers

Für verschiedene technische Zwecke ist es wünschenswert Katalysatoren in Form grösserer Körper einzusetzen, welche die Handhabung bei der Montage in Grosserien erleichtern. Eine andere Eigenschaft, die von Katalysatoren verlangt werden kann, ist eine geringe Wärmekapazität, damit der Katalysator bei Aufheizvorgängen schnell in den Bereich seiner Wirksamkeit kommt. Beides trifft für Katalysatoren zu, die zur Reinigung von Autoabgasen eingesetzt werden. Die erwähnten Forderungen können durch monolithähnliche Strukturen aus Metall erfüllt werden, die oberflächenreich sind und aus gewelltem dünnen Blech oder Drahtgeflecht bestehen. Entsprechend der Betriebstemperatur, für die der Katalysator geeignet sein muss, ist ein Metallmaterial zu wählen, das unter den Betriebsbedingungen ausreichend stabil ist. So ist zum Beispiel als Träger für Autoabgaskatalysatoren ein Material zu wählen, das in Gegenwart von bis zu 5 Vol% Sauerstoff und bis zu 15 Vol% Wasserdampf Temperaturen bis zu 1000°C ohne erhebliche Verzunderungserscheinungen übersteht. Diese Forderung ist nicht nur deshalb zu stellen, damit die mechanische Festigkeit der Struktur erhalten bleibt, sondern auch damit die auf der Oberfläche der Metallstruktur aufzubringende katalytisch wirksame Schicht nicht durch fortschreitende Verzunderung abgestossen wird. Ein für diese Zwecke besonders geeignetes Material liegt in nickelfreien Stählen vor, die mehr als 10 Gew% Chrom und 3 Gew% Aluminium neben gegebenenfalls weiteren Bestandteilen enthalten. Ein typischer Werkstoff ist beispielsweise die Heizleiterlegierung ®Aluchrom W (Nr. 1.4725, Vereinigte Deutsche Metallwerke AG), die 13 - 15 Gew% Cr, 3,5 - 5 Gew% Al, ≤1 Gew% Mn, ≤0,5 Gew% Si, ≤0,1 Gew% C, ≤0,045 Gew% P, ≤0,03 Gew% S, Rest Fe enthält.

Da die katalytisch wirksamen Komponenten, wie zum Beispiel Platin, Palladium, Rhodium, auf einem Trägermaterial mit möglichst gosser innerer Oberfläche aufgebracht werden müssen, besteht die Aufgabe, zunächst eine als Trägermaterial wirkende Schicht haftfest auf der metallischen Unterlage aufzutragen. Bei der Imprägnierung eines solchen beschichteten Metalls (Katalysatorträgers) mit Verbindungen der Edelmetalle dürfen diese nicht mit der Metalloberfläche reagieren und durch Zementieren grobkristalline Metallteilchen absetzen. Ausserdem darf das als Aktivkomponente aufzubringende Edelmetall nicht nachträglich insbesondere bei höherer Temperatur rekristallisieren.

Ein Merkmal des hier beschriebenen Verfahrens ist der Einsatz von Cerdioxid als Beschichtung. Der Katalysator kann z. B. wie folgt hergestellt werden:

Man walzt einen Streifen aus ®Aluchrom-W-Blech von 76 mm Breite und 0,04 mm Stärke durch einen Walzenstuhl, der zwei Zahnwalzen mit je 24 Zähnen bei einem Modul von 1 enthält. Das ablaufende gewellte Blech wird zusammen mit einem nichtgewalzten ebenen Blechstreifen gemeinsam aufgewickelt, so dass im zylindrischen Wickelkörper Lagen von gewelltem und glattem Material abwechseln. Nach Erreichen der gewünschten Dicke des Wickels werden die beiden Blechstreifen abgeschnitten und der Wickel in eine zylindrische Hülse gepresst. Der auf diese Weise hergestellte Körper wird z. B. 20 Stunden in Luft bei 1000°C geglüht. Das Material bedeckt sich dabei mit einer dünnen, grauen Oxidoberfläche. Der modifizierte Wickel wird nun in eine, ggf. heisse, Suspension von Ceroxidhydrat (Cerhydroxid) in einer wässrigen Lösung von Ammoniumnitrat getaucht. Nach dem Abtropfen der Suspension wird der Metallkörper getrocknet und z. B. 10 Stunden bei 800°C erneut geglüht. In Abhängigkeit von der gewünschten Stärke der Zwischenbeschichtung können Tränkung in der Suspension, Trocknung und Glühung bei 800°C mehrfach wiederholt werden. Die für die Tränkung benötigte Suspension wird z. B. aus einer wässrigen Lösung von Ce-(III)-Nitrat hergestellt, in die Ammoniak unter mechanischem Rühren bis zur stark alkalischen Reaktion der Mischung (pH 9) eingetragen wurde, wobei anschliessend überschüssiger Ammoniak unter Durchleiten von Luft abgedampft wurde. Das dabei entstehende Ammoniumnitrat verbleibt in der Lösung. Bei dreifacher Tränkung eines solchen Metallkörpers lassen sich Schichtdicken von Cerdioxid erhalten, die 50 Gew% des Metallgewichtes übersteigen. Das Cerdioxid überzieht die Metalloberfläche in einer dichten und verhältnismässig wisch- und kratzfesten Form.

Vor dem Imprägnieren des beschichteten Metallkörpers mit einer Lösung einer Edelmetallverbindung ist das Prenvolumen der Schicht zu bestimmen. Zu diesem Zweck wird der beschichtete Metallkörper in Wasser getaucht und seine Gewichtserhöhung nach oberflächlicher Entfernung des Wassers bestimmt. Danach wird der beschichtete Metallkörper wieder getrocknet. Der vorher aufgesogenen Wassermenge muss auch diejenige Menge an Edelmetall-Lösung entsprechen, mit der die gewünschte Menge an Edelmetall aufgebracht werden soll, das heisst die Konzentration an Edelmetallverbindung in der zur Tränkung verwendeten Lösung ist so hoch zu wählen, dass das von der Beschichtung aufgesogene Flüssigkeitsvolumen die gewünschte Menge an Edelmetall enthält.

Für die erfindungsgemässe Herstellung des Katalysatorträgers bzw. dessen Verwendung zur Herstellung des Katalysators kann anstatt eines Körpers aus gewelltem Blech auch ein Knäuel aus Metalldraht verwendet werden, der unregelmässig geformt oder aus Lagen von Drahtgewirken geschichtet aufgebaut und in einen zylindrischen Blechmantel eingepresst ist.

Ein besonderer Vorteil des als Beschichtung verwendeten Cerdioxids ist seine hohe thermische Beständigkeit; das heisst innerhalb des beispielsweise für Autoabgaskatalysatoren infrage kommenden Temperaturbereichs bis zu 1000° C verringert sich die innere Oberfläche des Cerdioxids kaum. Ebenso ist beim Betrieb solcher Katalysatoren in Gegenwart von Blei im Abgas keine gravierende Verringerung der inneren Oberfläche zu beobachten. Auch nach Belastung solcher Katalysatoren durch Abgas erweist sich die Beschichtung als mechanisch ausreichend stabil und haftfähig.

Ein weiterer Vorteil von Cerdioxid als Beschichtung ist, dass es selber katalytische Eigenschaft für die Umsetzung von Kohlenmonoxid mit Sauerstoff besitzt (vergl. Beispiel 1). Vor allem nach Vergiftung von platinhaltigen Katalysatoren auf Cerdioxid als Beschichtung durch im Abgas enthaltenes Blei wird die abgefallene Aktivität des Platins durch das Cerdioxid teilweise kompensiert.

Im einzelnen betrifft die Erfindung nunmehr ein Verfahren zur Herstellung eines Katalysatorträgers durch Glühen eines Formkörpers aus Chrom-Aluminium-Stahl während 2 - 50 Stunden bei 800 - 1100°C unter Zutritt von Luft und anschliessendes Aufbringen einer Oberflächenschicht aus Cerdioxid, welches dadurch gekennzeichnet ist, dass man einen Formkörper aus einer Legierung mit 10 - 30 Gew% Cr, 3 - 8 Gew% Al, 0 - 5 Gew% Mn, Ti, Si, C, P, S, Rest Fe, glüht, mit einer Suspension von Ceroxidhydrat in einer wässrigen Lösung von Ammoniumnitrat benetzt, trocknet und 5 - 20 Stunden bei 600 - 1000°C glüht.

Das Verfahren der Erfindung kann ferner bevorzugt und wahlweise dadurch gekennzeichnet sein, dass man

a) die Suspension von Ceroxidhydrat durch Vermischen einer wässrigen Lösung von Cer(III)-nitrat mit einer wässrigen Ammoniaklösung bis zur stark alkalischen Reaktion und anschliessendes Abdampfen überschüssigen Ammoniaks unter Durchleiten von Luft bereitet;

b) den Benetz-, Trocken- und Glühvorgang bei 600 - 1000°C 1 bis 5 mal wiederholt;

c) den Formkörper nach dem Benetzvorgang bei 40 - 80°C trocknet und bei 250 bis 400°C vorerhitzt;

d) den Formkörper mit 10 bis 150%, vorzugsweise 50 bis 100%, seines Gewichtes mit Cerdioxid beschichtet.

Die Erfindung betrifft weiterhin die Verwendung des nach dem geschilderten Verfahren erhältlichen Katalysatorträgers zur Herstellung eines Katalysators für die Reinigung der Abgase aus Verbrennungsmotoren und Industrieanlagen, welche dadurch gekennzeichnet ist, dass man den Katalysatorträger mit 0,05 bis 0,5 Gew% mindestens eines Edelmetalls beschichtet, indem man ihn mit der wässrigen Lösung mindestens einer Edelmetallverbindung tränkt, bei 40 - 80°C trocknet und auf 250 bis 400°C erhitzt.

Die Verwendung gemäss der Erfindung kann ferner bevorzugt und wahlweise dadurch gekennzeichnet sein, dass man e) zuerst das Wasseraufnahmevermögen des Katalysatorträgers bestimmt und anschliessend den Katalysatorträger mit der Lösung mindestens einer Edelmetallverbindung tränkt, welche so konzentriert ist, dass sie in der Lösungsmenge, welche der Katalysatorträger gerade zu absorbieren vermag, die gewünschte Menge Edelmetall enthält;

f) als Edelmetallverbindung die Nitrate oder Acetate des Rhodiums, Palladiums oder Platins, die Hexachloro-palladium(IV)-säure oder die Hexachloroplatin(IV)-säure einsetzt.

Aus der DE-B-2 458 111 ist bereits ein Verfahren zur Herstellung eines Katalysator-Trägermaterials bekannt, welches dadurch gekennzeichnet ist, dass man

a) ein Substrat aus einer aluminiumhaltigen ferritischen Legierung mit einer Dispersion eines Trägermaterials für das katalytische Material in einem flüssigen Medium, welches Trägermaterial mindestens zum Teil in ein Gel umgewandelt werden kann, in Kontakt bringt;

b) das Substrat mit einer Schicht des aus der Dispersion abgeschiedenen Trägermaterials, das zumindest teilweise aus einem Gel besteht, versieht; und

c) die aufgebrachte Schicht unter Bildung einer zusammenhängenden, haftenden Oberflächenschicht des Trägermaterials auf dem Substrat einbrennt.

Auf die bevorzugt aus Fe, Cr, Al und Y bestehende Legierung kann gemäss Spalte 4, Zeile 40 unter anderem auch Cerdioxid als Trägermaterial bzw. Oberflächenschicht aufgebracht werden. Wie dieses Aufbringen von Cerdioxid zu geschehen hat, wird allerdings nicht mitgeteilt. Es wird lediglich allgemein gefordert, dass das Trägermaterial als Dispersion in Form eines Gels oder Sols angewandt wird. Der fertige Katalysator zur Entgiftung von Abgasen aus Verbrennungsmotoren wird gemäss Beispiel 1 der DE-B-2 458 111 dadurch hergestellt, dass auf ein mit $Al_2O_3$ oberflächenbeschichtetes Blech (Katalysator-Trägermaterial) durch Zerstäuben aus einer Platinquelle mittels eines Argonionenstrahls Platin abgelagert wird.

Einzelheiten des erfindungsgemässen Verfahrens werden in den Beispielen erläutert.

Die Beispiele 1 - 4 zeigen im Gegensatz zum Vergleichsbeispiel 5, dass insbesondere dann eine gute Haftung des Cerdioxids auf dem geglühten, aluminiumhaltigen Stahl auftritt, wenn die Ceroxidhydrat-(Cerhydroxid-) Suspension gelöstes Ammoniumnitrat enthält. Dieses scheint beim Eindampfen der Suspension auf der Metalloberfläche einen Schmelzfluss zu bilden, der das Aufwachsen des $CeO_2$ auf der Metalloberfläche vermittelt.

Beispiel 1

Zwei in der allgemeinen Beschreibung genannte zylindrische Wickel aus ®Aluchrom W mit den Abmessungen: 0,04 mm Blechstärke, 24 mm Durchmesser, 76 mm Breite und 19 g Gewicht wurden im Glühofen unter Luftzutritt 20 Stunden bei 1000°C geglüht. Die oberflächlich anoxidierten Metallkörper wurden anschliessend in eine 90°C heisse Suspension von Ceroxidhydrat (Cerhydroxid) getaucht, die wie folgt hergestellt wurde: 1 Mol (= 434 g) $Ce(NO_3)_3 . 6 H_2O$ wurde in 2 l Wasser gelöst und unter starkem Rühren mit konz. Ammoniaklösung bis zur stark alkalischen Reaktion versetzt (pH 9). Anschliessend wurde diese Suspension unter Durchleiten von Luft bis auf etwa 800 ml eingedampft, wobei der überschüssige Ammoniak abdampfte. In diese $NH_4NO_3$- haltige Cerhydroxid-Suspension wurden die vorgeglühten Wickel eingetaucht, anschliessend bei 60°C getrocknet, 1 Stunde auf 300°C vorerhitzt und schliesslich bei 800°C 16 Stunden lang geglüht. Die Aufnahme eines wischfesten Belages von $CeO_2$ betrug 3 g je Metallkörper nach der ersten Tauchung. Nach insgesamt fünfmaliger Wiederholung dieses Vorganges betrug die Aufnahme 19 g $CeO_2$, entsprechend einer Gewichtszunahme von 100%. Diese so mit $CeO_2$ belegten Metallwickel wurden auf ihre katalytische Aktivität gegenüber CO-Oxidation untersucht. Durch zwei hintereinanderliegende Metallkörper wurde ein synthetisches Gasgemisch aus 2 Vol% CO, 3 Vol% $O_2$, 2,5 Vol% $H_2O$, Rest $N_2$ geleitet. Die Raumbelastung betrug 17 000 Liter Gas je Liter Katalysatorträger und Stunde bei 0°C und 1 bar.

Die Bestimmung der Temperaturen, bei denen 50% bzw. 90% des im Synthesegas enthaltenen CO umgesetzt sind, ergab folgende Werte:

$U_{50 \% CO}$       = 315 - 320°C
$U_{90 \% CO}$       = 350°C

### Beispiel 2

Zwei vorgeglühte Metallwickel wurden wie in Beispiel 1 beschrieben durch dreimaliges Eintauchen in Cerhydroxidsuspension bei gleicher anschliessender thermischer Nachbehandlung mit je 11 g $CeO_2$ belegt. Das Wasseraufnahmevermögen nach Belegung mit $CeO_2$ betrug 4,15 g $H_2O$ je Metallkörper. In 50 ml Wasser wurden 0,51 g Pt (in Form von Platinnitrat) und 0,20 g Pd (in Form von Palladiumacetat) gelöst. Mit dieser Lösung wurden die zwei Metallkörper getränkt. Bei einer $H_2O$-Aufnahme von 4,15 g je Wickel wurden 42,3 mg Pt und 16,6 mg Pd aufgenommen. Nach 15stündiger Trocknung bei 60°C und 10minütiger Erhitzung auf 300°C wurden mit diesem Katalysator unter den gleichen wie in Beispiel 1 beschriebenen Bedingungen mit einem Testgas, das zusätzlich 1000 ppm n-Hexan enthielt, folgende Temperaturen für den 50%- bzw. 90%- Umsatz von CO und n-Hexan gemessen:

$U_{50 \% CO}$       = 155°C
$U_{90 \% CO}$       = 165°C
$U_{50 \% n\text{-}Hexan}$       = 175°C
$U_{90 \% n\text{-}Hexan}$       = 215°C

### Beispiel 3

Es wird wie in den Beispielen 1 und 2 beschrieben gearbeitet. Durch zweimaliges Eintauchen

in die $NH_4NO_3$-haltige Cerhydroxidsuspension wurden 6,0 g $CeO_2$ je Metallkörper aufgetragen. Nach Bestimmung des Wasseraufnahmevermögens zu 3,1 g $H_2O$ wurde mit einer Lösung von Hexachloro-platin(IV)-säure getränkt. Die mit 3,1 ml Lösung aufgenommene Pt-Menge lag bei 60 mg Pt je Metallkörper. Nach Trocknung und thermischer Behandlung (1 Stunde bei 300°C) wurden am gleichen Testgas (2 Vol% CO, 3 Vol% $O_2$, 2,5 Vol% $H_9O$, 1000 ppm n-Hexan, Rest $N_2$) bei einer Raumgeschwindigkeit von 17 000 $h^{-1}$ folgende Temperaturen gemessen:

$U_{50 \% CO}$       = 125°C
$U_{90 \% CO}$       = 155°C
$U_{50 \% n\text{-}Hexan}$       = 143°C
$U_{90 \% n\text{-}Hexan}$       = 158°C

### Beispiel 4

Soweit nicht anders vermerkt, wurde unter den Bedingungen der Beispiele 1 und 2 gearbeitet. Zwei dicht zusammengestauchte Drahtgeflechte aus ®Aluchrom O (Nr. 1.4765, Vereinigte Deutsche Metallwerke AG; 22-25 Gew% Cr, 4,5-6 Gew% Al, ≤1 Gew% Ti, ≤0,1 Gew% C, 0,3-1,0 Gew% Si, ≤0,6 Gew% Mn; 0,045 Gew% P, 0,03 Gew% S, Rest Eisen) mit einer Drahtstärke von 0,25 mm und den Abmessungen: Durchmesser 24 mm, Breite 76 mm, Volumen (incl. Hohlräume) 34,4 ml, Gewicht 17 g, wurden 16 Stunden bei 800°C geglüht und anschliessend durch sechsmaliges Eintauchen in die in Beispiel 1 beschriebene Cerhydroxid-Suspension, Trocknen und Glühen mit $CeO_2$ belegt. Die $CeO_2$-Belegung betrug 6,4 g je Drahtgeflecht. Das Wasseraufnahmevermögen wurde zu 1,7 g $H_2O$ je Drahtgeflecht bestimmt. Getränkt wurde mit einer Platinnitratlösung. Die mit 1,7 ml Lösung aufgenommene Pt-Menge betrug 60 mg je Drahtgeflecht. Nach der üblichen thermischen Nachbehandlung liessen sich folgende Umsatztemperaturen für den 50%- bzw. 90%-Umsatz von CO und n-Hexan unter gleichen Bedingungen messen:

$U_{50 \% CO}$       = 115°C
$U_{90 \% CO}$       = 145°C
$U_{50 \% n\text{-}Hexan}$       = 130°C
$U_{90 \% n\text{-}Hexan}$       = 145°C

### Beispiel 5     (Vergleichsbeispiel)

Aus der wie in Beispiel 1 hergestellen $NH_4NO_3$-haltigen Cerhydroxid-Suspension wurde Ceroxidhydrat (Cerhydroxid) abgesaugt, mit viel Wasser gewaschen, der Filterkuchen mit Wasser auf 800 ml aufgefüllt, gründlich aufgeschlämmt und zum Tränken verwendet. In diese Suspension wurde ein auf 1000°C vorgeglühtes Blech aus ®Aluchrom W mit einer Blechstärke von 0,04 mm getaucht, anschliessend getrocknet, 1 Stunde auf 300°C vorerhitzt und schliesslich 16 Stunden bei 800°C geglüht. Der auf der Metalloberfläche haftende $CeO_2$-Belag hatte nur eine geringe Metallhaftung und war leicht abwischbar. Im Gegensatz dazu erhält man einen fest anhaftenden, wischfesten $CeO_2$-Belag, wenn man die in Beispiel 1 beschriebene $NH_4 NO_3$-haltige Suspension zur $CeO_2$-Belegung benutzt.

## Patentansprüche

1. Verfahren zur Herstellung eines Katalysatorträgers durch Glühen eines Formkörpers aus Chrom-Aluminium-Stahl während 2-50 Stunden bei 800-1100°C unter Zutritt von Luft und anschliessendes Aufbringen einer Oberflächenschicht aus Cerdioxid, dadurch gekennzeichnet, dass man einen Formkörper aus einer Legierung mit 10-30 Gew% Cr, 3-8 Gew% Al, 0-5 Gew% Mn, Ti, Si, C, P, S, Rest Fe, glüht, mit einer Suspension von Ceroxidhydrat in einer wässrigen Lösung von Ammoniumnitrat benetzt, trocknet und 5-20 Stunden bei 600 bis 1000°C glüht.

2. Verfahren nach Anspruch 1, dadurch gekennzeichnet, dass man die Suspension von Ceroxidhydrat durch Vermischen einer wässrigen Lösung von Cer(III)-nitrat mit einer wässrigen Ammoniaklösung bis zur stark alkalischen Reaktion und anschliessendes Abdampfen überschüssigen Ammoniaks unter Durchleiten von Luft bereitet.

3. Verfahren nach Anspruch 1 oder 2, dadurch gekennzeichnet, dass man den Benetz-, Trocken- und Glühvorgang bei 600-1000°C 1 bis 5 mal wiederholt.

4. Verfahren nach einem der Ansprüche 1-3, dadurch gekennzeichnet, dass man den Formkörper nach dem Benetzvorgang bei 40-80°C trocknet und bei 250 bis 400°C vorerhitzt.

5. Verfahren nach einem der Ansprüche 1-4, dadurch gekennzeichnet, dass man den Formkörper mit 10 bis 150%, vorzugsweise 50 bis 100%, seines Gewichtes mit Cerdioxid beschichtet.

6. Verwendung des nach dem Verfahren gemäss einem der Ansprüche 1-5 erhältlichen Katalysatorträgers zur Herstellung eines Katalysators für die Reinigung der Abgase aus Verbrennungsmotoren und Industrieanlagen, dadurch gekennzeichnet, dass man den Katalysatorträger mit 0,05 bis 0,5 Gew% mindestens eines Edelmetalls beschichtet, indem man ihn mit der wässrigen Lösung mindestens einer Edelmetallverbindung tränkt, bei 40-80°C trocknet und auf 250-400°C erhitzt.

7. Verwendung nach Anspruch 6, dadurch gekennzeichnet, dass man zuerst das Wasseraufnahmevermögen des Katalysatorträgers bestimmt und anschliessend den Katalysatorträger mit der Lösung mindestens einer Edelmetallverbindung tränkt, welche so konzentriert ist, dass sie in der Lösungsmenge, welche der Katalysatorträger gerade zu absorbieren vermag, die gewünschte Menge Edelmetall enthält.

8. Verwendung nach Anspruch 6 oder 7, dadurch gekennzeichnet, dass man als Edelmetallverbindung die Nitrate oder Acetate des Rhodiums, Palladiums oder Platins, die Hexachloropalladium(IV)-säure oder die Hexachloroplatin (IV)-säure einsetzt.

## Revendications

1. Procédé pour la fabrication d'un support de catalyseur par calcination d'un corps moulé en acier au chrome-aluminium à 800-1100°C pendant 2-50 h avec entrée d'air et ensuite dépôt d'une couche superficielle de dioxyde de cérium, caractérisé en ce que l'on calcine un corps moulé en un alliage à 10-30% en poids de Cr, 3-8% en poids de Al, 0-5% en poids de Mn, Ti, Si, C, P, S, le reste de Fe, on mouille avec une suspension d'oxyde de cérium hydraté dans une solution aqueuse de nitrate d'ammonium, on sèche et on calcine à 600-1000°C pendant 5 à 20 h.

2. Procédé selon la revendication 1, caractérisé en ce que l'on prépare la suspension d'oxyde de cérium hydraté par mélange d'une solution aqueuse de nitrate de cérium (III) avec une solution aqueuse d'ammoniaque jusqu'à réaction fortement alcaline et ensuite évaporation de l'ammoniac en excès avec barbotage d'air.

3. Procédé selon la revendication 1 ou 2, caractérisé en ce que l'on répète 1 à 5 fois les processus de mouillage, séchage et calcination à 600-1000°C.

4. Procédé selon l'une des revendications 1-3, caractérisé en ce que l'on sèche le corps moulé à 40-80°C après le processus de mouillage et on le préchauffe à 250-400°C.

5. Procédé selon l'une des revendications 1-4, caractérisé en ce que l'on recouvre le corps moulé avec 10 à 150%, de préférence 50 à 100%, de son poids en dioxyde de cérium.

6. Utilisation du support de catalyseur obtenu par le procédé selon l'une des revendications 1-5 pour la fabrication d'un catalyseur pour la purification des gaz résiduaires de moteurs à combustion et d'installations industrielles, caractérisée en ce que l'on recouvre le support de catalyseur avec 0,05 à 0,5% en poids d'au moins un métal noble, par imprégnation avec la solution aqueuse d'au moins un composé de métal noble, séchage à 40-80°C et chauffage à 250-400°C.

7. Utilisation selon la revendication 6, caractérisée en ce que l'on détermine d'abord le pouvoir d'absorption de l'eau du support de catalyseur et l'on imprègne ensuite le support de catalyseur avec la solution d'au moins un composé de métal noble, à une concentration telle qu'elle contienne la quantité désirée de métal noble dans la quantité de solution que le support de catalyseur peut juste absorber.

8. Utilisation selon la revendication 6 ou 7, caractérisée en ce que l'on utilise comme composé de métal noble les nitrates ou acétates du rhodium, du palladium ou du platine, l'acide hexachloropalladique (IV) ou l'acide chloroplatinique (IV).

## Claims

1. Process for making a catalyst carrier by calcining a moulded structure of chrome-aluminium steel over a period of 2-50 hours at 800-1100°C with admission of air and then coating it superficially with a layer of cerium dioxide, characterized in that a moulded structure of an alloy of 10-30 weight % of Cr, 3-8 weight % of Al, 0-5

weight % of Mn, Ti, Si, C, P, S, the balance being Fe, is calcined, wetted with a suspension of cerium oxide hydrate in an aqueous solution of ammonium nitrate, dried and calcined at 600-1000°C over a period of 5 to 20 hours.

2. Process as claimed in claim 1, characterised in that the suspension of cerium oxide hydrate is prepared by mixing an aqueous solution of cerium (III) nitrate with an aqueous solution of ammonia until the resulting mixture produces a strongly alkaline reaction, and evaporating ammonia in excess by passing air through the mixture.

3. Process as claimed in claim 1 or 2, characterised in that the wetting operation, drying operation and calcining operation at 600-1000°C are repeated 1 to 5 times.

4. Process as claimed in any of claims 1 to 3, characterised in that the moulded structure is dried at 40-80°C after the wetting operation, and preheated to 250-400°C.

5. Process as claimed in any of claims 1 to 4, characterised in that the moulded structure is coated with 10 to 150%, preferably 50 to 100%.

of cerium dioxide, based on its weight.

6. Use of the catalyst carrier obtainable by the process as claimed in any of claims 1 to 5 for making a catalyst for the purification of the exhaust gases of combustion engines and production facilities, characterised in that the catalyst carrier is coated with 0.05-0.5 weight % of at least one noble metal by impregnating it with the aqueous solution of at least one noble metal compound, drying it at 40-80°C and heating it at 250-400°C.

7. Use as claimed in claim 6, characterised in that the catalyst carrier is first tested for its power of absorbing water and then impregnated with the solution of at least one noble metal compound which is so concentrated that the quantity of solution just absorbable by the catalyst carrier has the desired quantity of noble metal contained therein.

8. Use as claimed in claim 6 or 7, characterised in that the nitrates or acetates of rhodium, palladium or platinum, hexachloropalladic (IV) acid or hexachloroplatinic (IV) acid are used as noble metal compound.